# EUROPEAN PATENT APPLICATION

(11) **EP 3 582 590 A1**
(43) Date of publication of application: **18.12.2019**
(21) Application number: 17896049.8
(22) Date of filing: 30.11.2017
(51) Int. Cl.: H05B 37/02

(54) **COMMUNICATION CONTROL DEVICE AND COMMUNICATION CONTROL SYSTEM**

(30) Priority: 09.02.2017 JP 2017022218
(71) Applicant: Panasonic Intellectual Property Corporation of America, Torrance, CA 90503 (US)
(72) Inventor: MORITA, Junichi, Osaka-shi, Osaka 540-6207 (JP); SHIRAKATA, Naganori, Osaka-shi, Osaka 540-6207 (JP); TAKAHASHI, Hiroshi, Osaka-shi, Osaka 540-6207 (JP); URUSHIHARA, Tomoya, Osaka-shi, Osaka 540-6207 (JP)
(74) Representative: Grünecker Patent- und Rechtsanwälte PartG mbB
(86) International application number: PCT/JP2017/042979
(87) International publication number: WO 2018/146918

(57) **Abstract**

A communication control device includes a performance position determination unit that determines, from among first to Nth zones (N is an integer greater than or equal to 2) each used to display information by using differences in light emission states of light emitting units included in a plurality of slave devices, the first zone and the second zone in which the information is to be displayed, on the basis of the information and positions of the slave devices and further includes a performance control unit that transmits, to each of the slave devices, a first control command that controls the light emission state of the light emitting unit in order to display the information at a plurality of positions between the first zone and the second zone.

## Description

### Technical Field

The present disclosure relates to a communication control device and a communication control system.

### Background Art

In recent years, in a facility that accommodates a large number of spectators, such as a stadium or a hall, each of the spectators has had a wirelessly controlled light emitting device (for example, a penlight or a bracelet) in their hand, and a control device has controlled on/off operation of each of the light emitting devices. In this manner, a part or whole area in which the light emitting devices are arranged (i.e., an area in which the spectators are arranged) is used as a performance area. For example, a performance of displaying a letter (or letters) in the area or changing the color of the area takes place. Hereinafter, such a performance is referred to as a "mass performance".

PTL 1 describes a system in which, for example, a spectator reads a wireless tag of an RFID (Radio Frequency IDentifier) tag attached to their seat by using a reader unit mounted in a slave device (a light emitting device) and, thus, the position information about the slave device is sent to a control device. Thereafter, the control device provides a mass performance on the basis of the received position information about the slave devices.

### Citation List

### Patent Literature

PTL 1: Japanese Unexamined Patent Application Publication No. 2005-251443

### Summary of Invention

### Technical Problem

However, according to the system described in PTL 1, a blank zone of the performance area generated due to the absence of light emitting devices (for example, spectators are not present, or the spectators do not have light emitting devices) is not taken into account. Consequently, it is difficult to provide a performance with high visibility.

A non-limiting embodiment of the present disclosure provides a communication control device and a communication control system capable of providing a performance with high visibility in an environment where a blank zone is created.

### Solution to Problem

According to an aspect of the present disclosure, a communication control device includes a performance position determination unit that determines, from among first to Nth zones (N is an integer greater than or equal to 2) each used to display information by using differences in light emission states of light emitting units included in a plurality of slave devices, the first zone and the second zone in which the information is to be displayed, on the basis of the information and positions of the slave devices and further includes a performance control unit that transmits, to each of the slave devices, a first control command that controls the light emission state of the light emitting unit in order to display the information at a plurality of positions between the first zone and the second zone.

According to an aspect of the present disclosure, a communication control system includes a communication control device, at least one master device connected to the communication control device, and a plurality of slave devices wirelessly connected to the at least one master device, where each of the slave devices includes a light emitting unit. The communication control device includes a performance position determination unit that determines, from among first to Nth zones (N is an integer greater than or equal to 2) each used to display information by using differences in light emission states of light emitting units included in a plurality of slave devices, the first zone and the second zone in which the information is to be displayed, on the basis of the information and positions of the slave devices and further includes a performance control unit that transmits, to each of the slave devices, a first control command that controls the light emission state of the light emitting unit in order to display the information at a plurality of positions between the first zone and the second zone. Each of the slave devices controls the light emission state of the light emitting unit on the basis of the first control command received via the at least one master device.

It should be noted that general or specific embodiments may be implemented as a system, a method, an integrated circuit, a computer program, a storage medium, or any selective combination thereof.

### Advantageous Effects of Invention

According to an aspect of the present disclosure, a highly visible performance can be presented in an environment in which a blank zone is created.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

[Fig. 1A] Fig. 1A is a block diagram of illustrating an example of a performance area with no blank zone.
[Fig. 1B] Fig. 1B is a diagram illustrating an example of a mass performance provided in the performance area illustrated in Fig. 1A.
[Fig. 2A] Fig. 2A is a diagram illustrating an example of a performance area in which a blank zone is present.
[Fig. 2B] Fig. 2B is a diagram illustrating an example of a mass performance provided in the performance area illustrated in Fig. 2A.
[Fig. 3] Fig. 3 is a diagram illustrating an example of the system configuration of a control system according to an embodiment of the present disclosure.
[Fig. 4] Fig. 4 is a diagram illustrating an example of a performance area according to an embodiment of the present disclosure.
[Fig. 5] Fig. 5 is a diagram illustrating a first state of the mass performance according to an embodiment of the present disclosure.
[Fig. 6] Fig. 6 is a diagram illustrating a second state of the mass performance according to the embodiment of the present disclosure.
[Fig. 7] Fig. 7 is a diagram illustrating a third state of the mass performance according to the embodiment of the present disclosure.
[Fig. 8] Fig. 8 is a flowchart illustrating the processing flow of a performance position determination method according to an embodiment of the present disclosure.
[Fig. 9] Fig. 9 is a flowchart illustrating the processing flow of a slave device according to an embodiment of the present disclosure.

### Description of Embodiments

A mass performance that takes place in an environment where a blank zone is created is described in detail below.

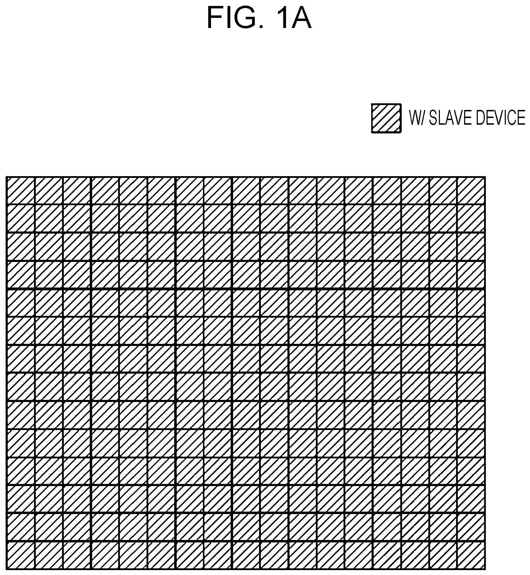

Fig. 1A is a diagram illustrating an example of a performance area with no blank zone. Each of grids illustrated in Fig. 1A corresponds to, for example, a seat for one of spectators. In an example illustrated in Fig. 1A, all of the seats are occupied by the spectators. Accordingly, slave devices are located in all of the grids.

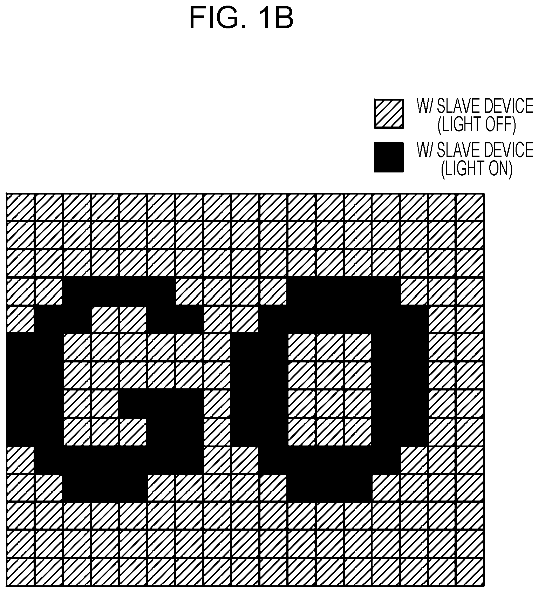

Fig. 1B is a diagram illustrating an example of a mass performance provided in the performance area illustrated in Fig. 1A. In Fig. 1B, a performance image is created from a still image of letters "GO" and is displayed in the performance area as an example of a mass performance. The performance image created from a still image of letters "GO" is displayed by using the differences in light emission states of the slave devices (for example, the difference between light-on and light-off states).

In Fig. 1B, in an environment in which a slave device is located in each of all the grids (that is, in an environment where there is no blank zone), the slave devices are present at the positions at which the control device wants to have illumination. Consequently, a highly visible performance can be presented.

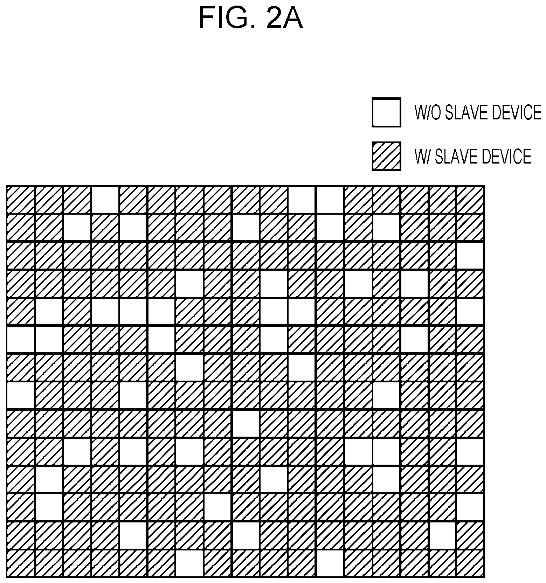

Fig. 2A is a diagram illustrating an example of a performance area in which a blank zone is present. Each of the grids in Fig. 2A corresponds to, for example, a seat for one spectator. In addition, in the example illustrated in Fig. 2A, some seats are not occupied by spectators (the slave devices are not present) and, thus, the performance area has a blank zone.

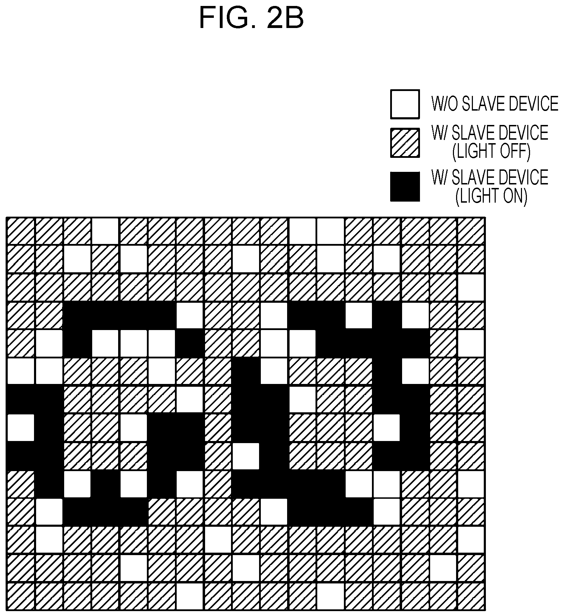

Fig. 2B is a diagram illustrating an example of a mass performance presented in the performance area illustrated in Fig. 2A. Like in Fig. 1B, in Fig. 2B, the performance image created from a still image of letters "GO" is displayed in the performance area as an example of the mass performance.

In Fig. 2B, in an environment where a blank zone is present, it is difficult to provide a performance with high visibility because a slave device is not located at the position at which the control device wants to provide illumination.

The present disclosure is provided to solve the above-described problem. It was found that a performance with high visibility can be presented even in an environment where a blank zone exists by moving an area where the performance takes place. Thus, the present disclosure is achieved.

Embodiments of the present disclosure are described in detail below with reference to the accompanying drawings. Note that the embodiments described below are merely exemplary and are not intended to limit the present disclosure.

### (Embodiment)

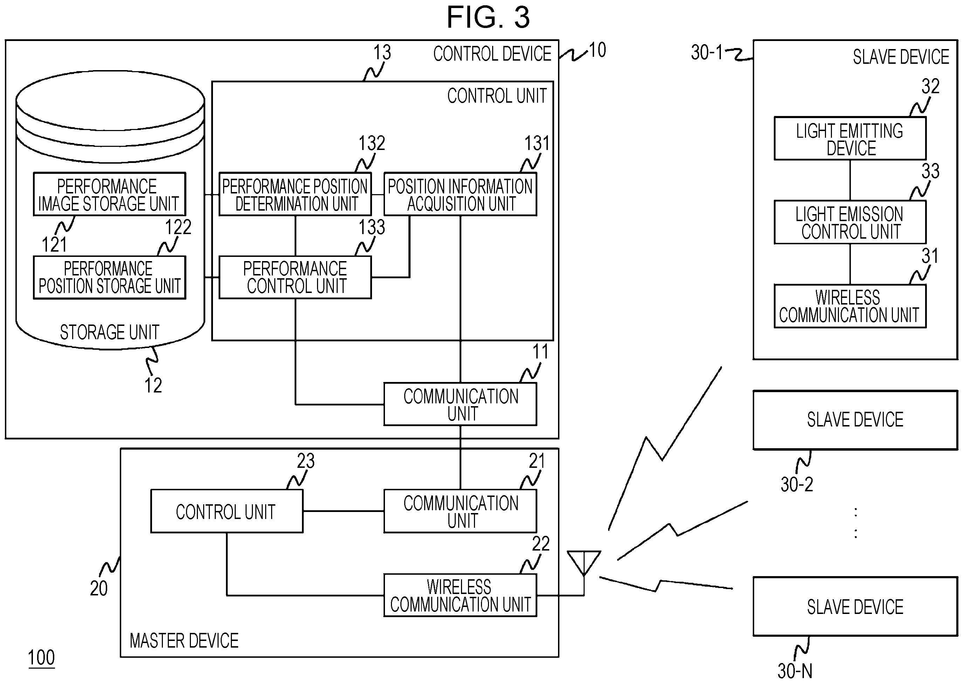

Fig. 3 is a diagram illustrating an example of the system configuration of a control system 100 according to the present embodiment. In Fig. 3, the control system 100 includes a control device 10, a master device (Master) 20, and a plurality of slave devices (Slaves) 30 (slave devices 30-1 to 30-N). The control system 100 is installed in, for example, a facility that accommodates many spectators, such as a stadium or a hall. Note that only one master device 20 is illustrated in Fig. 3. However, according to the present embodiment, a plurality of master devices can be used.

The control device 10 is connected to the master device 20 via, for example, a network such as a wired LAN (Local Area Network) and performs overall control of the control system 100. The control device 10 takes the form of, for example, a PC (Personal Computer).

The control device 10 includes a communication unit 11, a storage unit 12, and a control unit 13.

The communication unit 11 is, for example, a communication interface of a wired LAN. The communication unit 11 performs, for example, a transmission process of a signal to be transmitted to the master device 20 and a reception process of a signal received from the master device 20.

The storage unit 12 is, for example, an HDD (Hard Disk Drive) or a memory card. The storage unit 12 can be at least one storage device for storing various data. More specifically, the storage unit 12 includes a performance image storage unit 121 and a performance position storage unit 122.

The performance image storage unit 121 stores a performance image used for a performance provided by the control system 100. An image to be stored is, for example, a still image of a letter (letters) that requires representation with highly visibility.

A performance position determined by the performance position determination unit 132 (described below) is stored in the performance position storage unit 122. As used herein, the term "performance position" refers to part or whole of the area having the slave devices 30-1 to 30-N arranged therein that is used to display a performance image. A performance position stored in the performance position storage unit 122 is, for example, at least one coordinate pair based on the coordinate axes defined for the whole area and that indicates an area in which a performance image is to be displayed.

The control unit 13 performs input and output of data from and to the storage unit 12 and communicates with the slave devices 30-1 to 30-N via the communication unit 11. More specifically, the control unit 13 includes a position information acquisition unit 131, a performance position determination unit 132, and a performance control unit 133.

The position information acquisition unit 131 acquires the current positions of the slave devices 30-1 to 30-N via the communication unit 11.

The method for acquiring a current position is not limited to any particular one. For example, each of the slave devices 30-1 to 30-N may detect its own current position and notify the control device 10 of the current position via the master device 20. Alternatively, the master device 20 may detect the current positions of the slave devices 30-1 to 30-N and notify the control device 10 of the current positions. Still alternatively, a position estimation system (or a position estimation device) which differs from the control system 100 may detect the current positions of the slave devices 30-1 to 30-N and notify the control system of the current positions.

More specifically, as a method for detecting the current positions by the slave devices 30-1 to 30-N, a GPS (Global Positioning System) function can be employed, for example.

The performance position determination unit 132 determines the next performance position on the basis of the positions of the slave devices acquired by the position information acquisition unit 131, the performance image stored in the performance image storage unit 121, and the previous performance position stored in the performance position storage unit 122. The performance position determination unit 132 stores the determined performance position in the performance position storage unit 122. A particular method for determining the performance position is described below.

The performance control unit 133 determines the light emission state of each of the slave devices 30-1 to 30-N on the basis of the performance position determined by the performance position determination unit 132. Thereafter, the performance control unit 133 generates a control command for each of the slave device 30-1 to the slave device 30-N and transmits the control commands via the communication unit 11. The light emission state of the slave device 30 may include, for example, the light on or off, the color of light, and the intensity of light. Note that the control command is a command for specifying the light emission state determined by the performance control unit 133.

The master device 20 is connected to the control device 10 via a wired LAN network. In addition, the master device 20 is wirelessly connected to the slave devices 30-1 to 30-N. The master device 20 is, for example, an access point that supports a 2.4 GHz band wireless LAN.

More specifically, the master device 20 includes a communication unit 21, a wireless communication unit 22, and a control unit 23.

The communication unit 21 is, for example, a communication interface of a wired LAN. The communication unit 21 performs, for example, a transmission process on a signal to be transmitted to the control device 10 and a reception process on a signal received from the control device 10.

The wireless communication unit 22 is, for example, a communication interface of a 2.4 GHz band wireless LAN. The wireless communication unit 22 performs, for example, a transmission process on a signal to be transmitted to each of the slave devices 30-1 to 30-N and a reception process on a signal received from each of the slave devices 30-1 to 30-N.

The control unit 23 controls, for example, communication with the control device 10 via the communication unit 21 and communication with the slave devices 30-1 to 30-N via the wireless communication unit 22.

The slave devices 30-1 to 30-N communicate with the control device 10 via the master device 20 which is wirelessly connected thereto. The slave devices 30-1 to 30-N are, for example, wirelessly controllable penlights or bracelets, which are carried by the spectators. The slave devices 30-1 to 30-N have the same configuration. Accordingly, the configurations of the slave devices 30-1 to 30-N are described with reference to the configuration of the slave device 30-1.

The slave device 30-1 includes a wireless communication unit 31, a light emitting device 32, and a light emission control unit 33.

The wireless communication unit 31 is, for example, a communication interface of a 2.4 GHz band wireless LAN. The wireless communication unit 31 performs, for example, a transmission process of a signal to be transmitted to the master device 20 and a reception process of a signal received from the master device 20. For example, the wireless communication unit 31 receives a control command from the master device 20.

The light emitting device 32 is a device that includes at least one light emitting diode (LED) light. The light emitting device 32 can put the light on or off and can change the color of the light to a specified color.

The light emission control unit 33 turns on or off the light emitting device 32 and changes the color of the light to the specified color on the basis of the control command received via the wireless communication unit 31.

The method for determining the performance position is described below with reference to the flow of a particular mass performance.

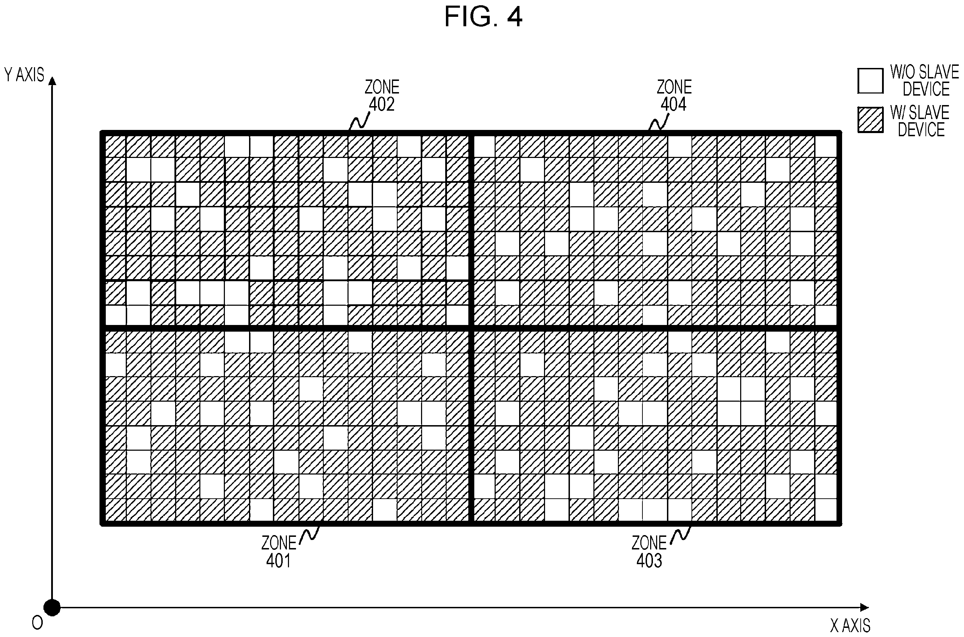

Fig. 4 is a diagram illustrating an example of a performance area according to the present embodiment. Each of blocks (grids) illustrated in Fig. 4 corresponds to, for example, a seat for one of spectators. And, if a spectator is seated, a slave device (for example, the slave device 30-1) is present in the grid.

In addition, in Fig. 4, an origin O and two axes (X axis and Y axis) each passing through the origin O are defined in advance. For example, the position information acquisition unit 131 acquires the X coordinate and the Y coordinate of each of the slave devices 30-1 to 30-N as the current positions of the slave devices 30-1 to 30-N. Furthermore, the performance position storage unit 122 stores, as the performance position, a plurality of X coordinates and Y coordinates indicating an area in which the performance is to be presented. For example, in the case where the area in which the performance is presented is a rectangular area, the X and Y coordinates indicating each of the four corners of the rectangular area are stored as the performance position.

An example in which the area illustrated in Fig. 4 is considered as the whole performance area and a still image of the letters "GO" is produced in part of the whole performance area is described below.

The performance position determination unit 132 divides the whole performance area illustrated in Fig. 4 into a plurality of zones. In Fig. 4, as an example, the whole performance area is divided into four (2 × 2) zones (zones 401 to 404) by lines parallel to the X axis and lines parallel to the Y axis. Note that the performance area is divided into four zones in Fig. 4. However, the number of the zones is not limited thereto. Even when the performance area is divided into five or more zones, the present embodiment is applicable. In addition, in Fig. 4, the performance area is divided such that the zones have the same size and shape. However, the present embodiment is not limited thereto. The zones may have different sizes and shapes. Furthermore, in Fig. 4, the performance area is divided such that the zones do not overlap. However, the performance position determination unit 132 may determine the zones that overlap each other.

The performance position determination unit 132 calculates the density of the slave devices 30 in each of the zones 401 to 404. Thereafter, the performance position determination unit 132 selects, from among the zones 401 to 404, a zone having the highest density as a zone (an initial position) in which the performance is to be presented first. Note that the zones 401 to 404 are zones adjacent to one another. For example, zones that are adjacent to the zone 401 are the zone 402, the zone 403, and the zone 404.

The density of the slave devices 30 is represented by the ratio of the number of actual slave devices 30 to the number of slave devices 30 that can exist in the divided zone. In the example illustrated in Fig. 4, the divided zones have the same dimensions, and the number of the slave devices 30 that can exist in each of the zones is the same. Accordingly, the number of slave devices 30 in each of the zones corresponds to the density. Note that the divided zones do not have to have the same dimensions. As long as the density can be calculated, the present embodiment is applicable. In addition, one of the divided zones may be used as, for example, a storage space for equipment of the sound system, and the zone can be set as a zone not used for the mass performance in advance.

In the example illustrated in Fig. 4, since the zone 401 has the highest density, the performance position determination unit 132 determines the zone 401 as an initial position.

Subsequently, the performance position determination unit 132 compares the densities of the zones each adjacent to the zone 401, which is determined as the initial position, with one another. Thus, the performance position determination unit 132 selects, as the zone in which the performance is to be presented last (a target position), a zone having the second highest density after the initial position.

In the example illustrated in Fig. 4, the zone 404 is a zone having the second highest density after the zone 401. Accordingly, the performance position determination unit 132 determines the zone 404 as the target position.

Subsequently, the performance position determination unit 132 sequentially determines the performance positions so that the performance is achieved by moving the performance image from the initial position to the target position.

More specifically, the performance position determination unit 132 calculates the distance from the initial position to the target position and, thereafter, sequentially determines the performance positions so that the performance image moves equal distance at regular intervals.

The performance position determination unit 132 stores the determined performance positions in the performance position storage unit 122. The performance positions stored in the performance position storage unit 122 include the initial position and the target position.

Subsequently, to present the performance, the performance control unit 133 sequentially reads the performance positions stored in the performance position storage unit 122 from the initial position, determines the light emission state of each of the slave devices 30 so that the performance image is displayed in the read performance position, and generates the control commands.

For example, the performance control unit 133 determines the light emission state of each of the slave devices 30 so that the still image of the letters "GO" is displayed in the zone 401, which is the initial position. For example, the performance control unit 133 sets the light emission states of the slave devices 30 located in the zone 401 at the positions corresponding to the letters "GO" to "light on" and sets the light emission states of the slave devices 30 other than the slave devices 30 having the light emission states set to "light on" to "light off'.

Thereafter, the performance control unit 133 transmits a control command to each of the slave devices 30 via the communication unit 11 and the master device 20.

The light emission control unit 33 of each of the slave devices 30 controls switching between the light-on state and the light-off state of the light emitting device 32 on the basis of the received control command.

The performance control unit 133 of the control device 10 transmits the control command, and the light emission control unit 33 of the slave device 30 controls the light emitting device 32 on the basis of the control command. In this manner, a mass performance takes place.

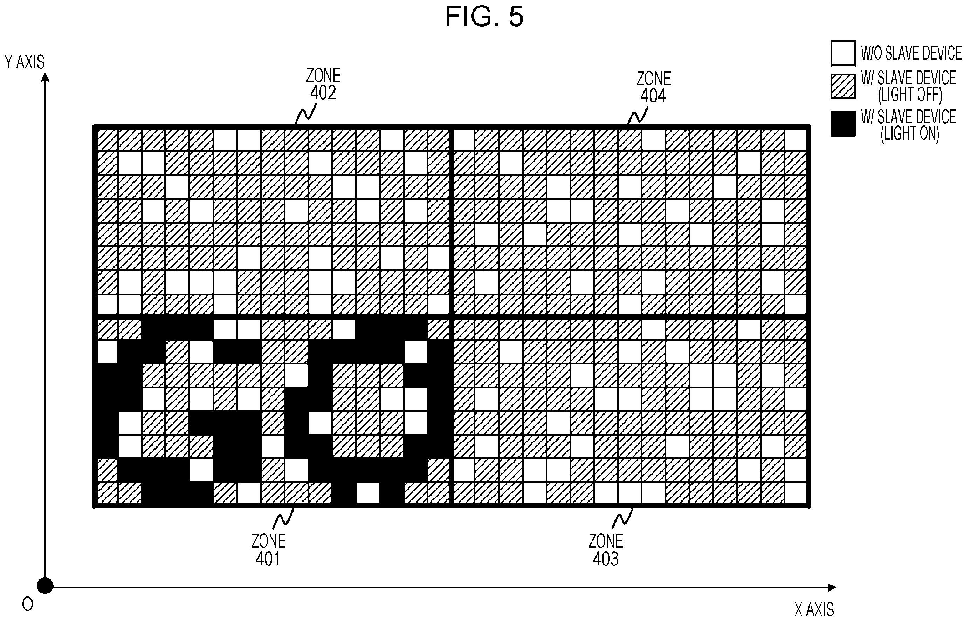

Fig. 5 is a diagram illustrating a first state of the mass performance according to the present embodiment. Like Fig. 4, Fig. 5 illustrates a still image of the letters "GO" displayed in the zone 401 (the initial position) of the whole performance area. The performance image corresponding to the still image of the letters "GO" is created and displayed by using the differences in the light emission states of the slave devices 30 (for example, the difference between the light-on and light-off states).

After the state illustrated in Fig. 5 occurs, the performance control unit 133 determines the light emission state of each of the slave devices 30 so that the still image of the letters "GO" is displayed at the next performance position. Thereafter, the performance control unit 133 transmits a control command to each of the slave devices 30 via the communication unit 11 and the master device 20. The light emission control unit 33 of each of the slave devices 30 controls switching between the light-on and light-off states of the light emitting device 32 on the basis of the received control command.

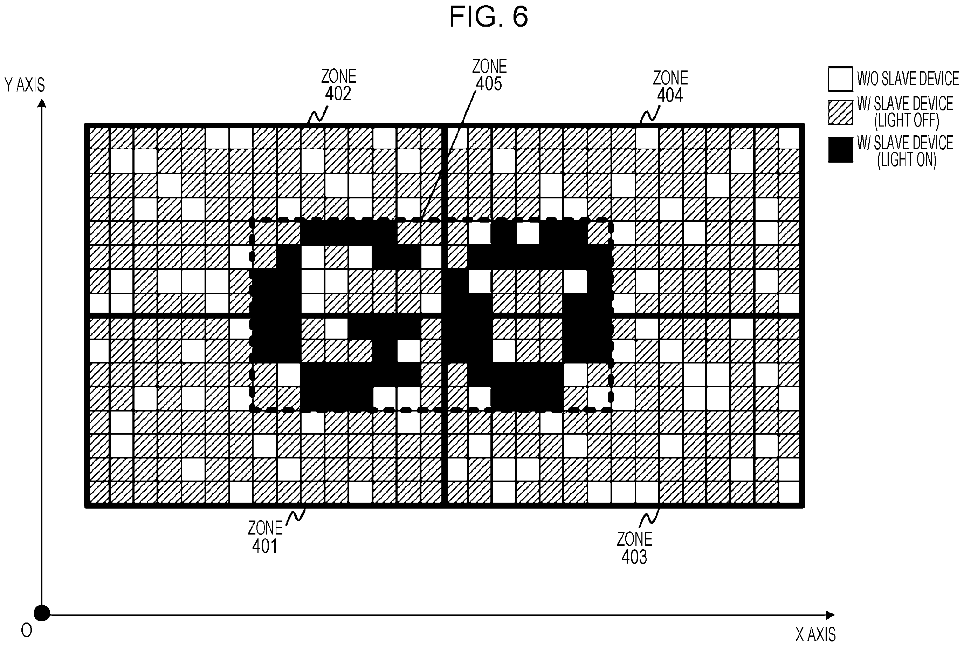

Fig. 6 is a diagram illustrating a second state of the mass performance according to the present embodiment. Like Fig. 4, Fig. 6 illustrates a still image of the letters "GO" displayed in a zone 405, which is a performance position located between the zone 401 (the initial position) and the zone 404 (the target position) of the whole performance area.

A zone 405 is a zone obtained by moving the zone 404 a predetermined distance and is a zone used to present the performance. As described above, the performance can be presented in a zone that is different from any one of the zones 401 to 404 obtained by dividing the whole performance area. Note that the zone 401 partially overlaps the zone 405. In addition, the zone 405 partially overlaps the zone 404. Note that in Fig. 6, the zone 405 overlaps the zone 401 which is the initial position and the zone 404 which is the target position. However, if the initial position is far away from the target position, the zone 405 is in one of a state in which it overlaps one of the initial position and the target position or a state in which it overlaps neither the initial position nor the target position.

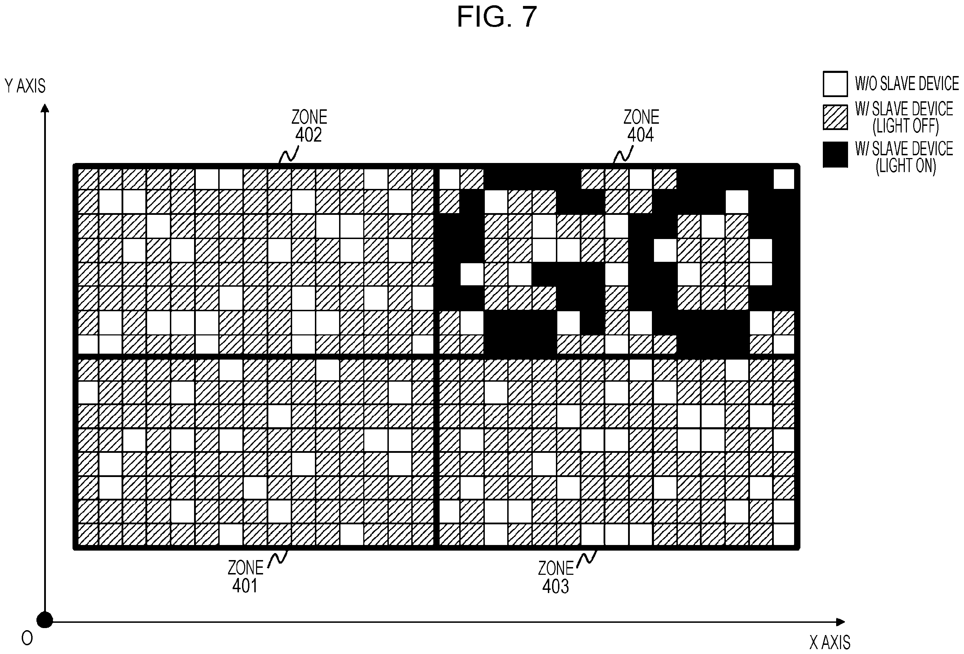

Fig. 7 is a diagram illustrating a third state of a mass performance according to the present embodiment. Like Fig. 4, Fig. 7 illustrates a still image of the letters "GO" displayed in a zone 404 which is the target position in the whole performance area.

The performance control unit 133 transmits control commands at regular intervals. Thus, transitions from the state illustrated in Fig. 5 to the state illustrated in Fig. 7 occur at regular intervals. As a result, the performance image is displayed while moving and, thus, the performance with high visibility can be provided.

Note that while three states of a mass performance have been described with reference to Figs. 5 to 7, another state of the mass performance may occur between the first state illustrated in Fig. 5 and the second state illustrated in Fig. 6 and/or between the second state illustrated in Fig. 6 and the third state illustrated in Fig. 7.

The processing flow of the performance position determination method is described below.

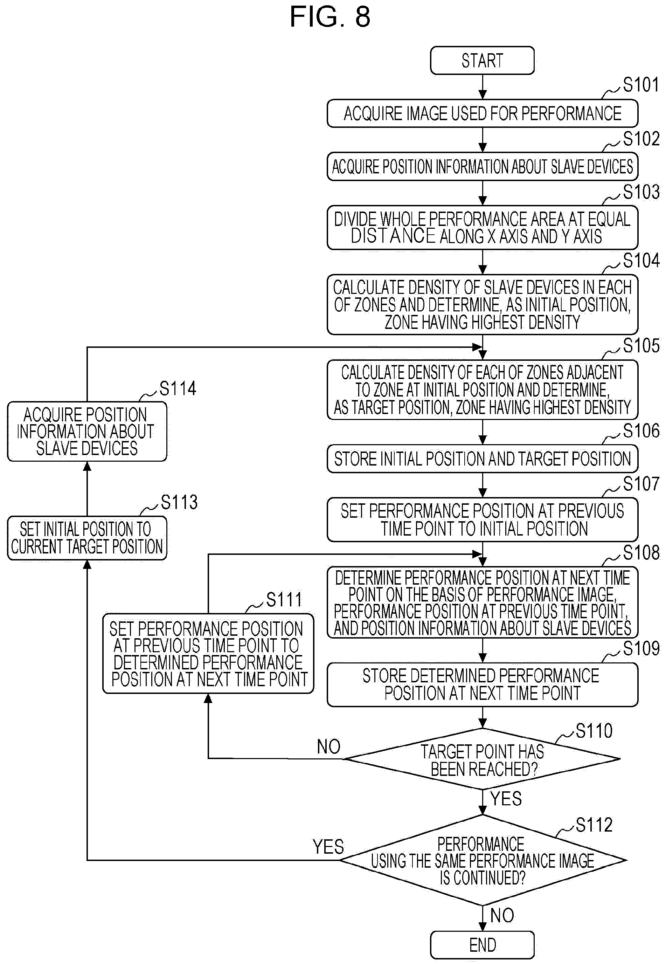

Fig. 8 is a flowchart illustrating the processing flow of the performance position determination method according to the present embodiment.

In step 101 (S101), the performance position determination unit 132 acquires, from the performance image storage unit 121, an image used for a performance.

In S102, the performance position determination unit 132 acquires position information about the plurality of slave devices 30 from the position information acquisition unit 131.

In S103, the performance position determination unit 132 divides the whole performance area at equal distance along the X axis and the Y axis.

In S104, the performance position determination unit 132 calculates the density of the slave devices 30 in each of the divided zones and determines, as the initial position, the zone with the highest density.

In S105, the performance position determination unit 132 calculates the density of each of the zones adjacent to the zone which is determined as the initial position and determines, as the target position, the zone having the highest density among the adjacent zones. Note that if the density calculated in S104 can be used (for example, if the elapsed time from the process of S104 is short), the performance position determination unit 132 need not calculate the density again.

In S106, the performance position determination unit 132 stores the initial position and the target position in performance position storage unit 122.

In S107, as the initial setting, the performance position determination unit 132 sets a performance position at the previous time point to the initial position.

In S108, the performance position determination unit 132 determines a performance position at the next time point on the basis of the performance image used for the performance, the performance position at the previous time point, and the position information about the slave devices 30.

In S109, the performance position determination unit 132 stores the determined performance position at the next time point in the performance position storage unit 122.

In S110, the performance position determination unit 132 determines whether the performance position at the next time point has reached the target position.

If the performance position at the next time point has not reached the target position (NO in S110), the performance position determination unit 132 sets the performance position at the previous time point to the performance position at the next time point in S111. Thereafter, the processing flow returns to S108.

If the performance position at the next time point has reached the target position (YES in S110), the performance position determination unit 132 determines, in S112, whether to continue the presentation of the performance image acquired in S101.

If it is determined that the presentation of the performance image acquired in S101 is to be continued (YES in S112), the performance position determination unit 132 sets the initial position to the current target position in S113.

Subsequently, in S114, the performance position determination unit 132 acquires the position information about the plurality of slave devices 30 from the position information acquisition unit 131. Thereafter, the processing flow returns to S105.

If it is determined that the presentation of the performance image acquired in S101 is not to be continued (NO in S112), the processing flow ends. Note that the position at which the performance image is displayed last before the end of the processing flow is the final zone.

As described above, after the performance using the performance image takes place at the target position, the initial position and the target position may be determined again, and the performance using the performance image may be continued. Alternatively, after the performance using the performance image takes place at the target position, the performance using the performance image may be ended. Note that a particular example is described below with reference to Figs. 5 to 7 in which after the performance using the performance image takes place at the target position, the initial position and the target position are determined again and the performance is continued.

If the performance position determination unit 132 determines the zone 404 which is the current target position as the initial position and if, among the zones 401 to 403 each adjacent to the zone 404, the one having the highest density of the slave devices is the zone 401, the performance position determination unit 132 determines the zone 401 as the target position and provides the performance from the zone 404 to the zone 401.

In this case, for example, after the third state illustrated in Fig. 7 in which the still image of the letters "GO" is displayed in the zone 404 which is the target position, transition sequentially occurs from the third state, to the second state illustrated in Fig. 6, and then to the first state illustrated in Fig. 5 at regular time intervals.

As described above, the initial position and the target position are determined from among the zone 401 to the zone 404, and the process of providing a performance is repeated. In this manner, even when the performance is continued, the performance image is displayed while moving. As a result, a performance with high visibility can be provided.

As described above, according to the processing flow illustrated in Fig. 8, the control device 10 sequentially determines the performance position such that the performance position moves in a range of the initial position to the target position. The determined performance positions are stored in time series from the initial position to the target position. Thereafter, upon receiving an instruction to start the performance, the performance control unit 133 of the control device 10 reads one of the performance positions starting from the initial position and stored in time series and generates a control command so that the performance image is displayed at the read performance position. Subsequently, the performance control unit 133 transmits the generated control command.

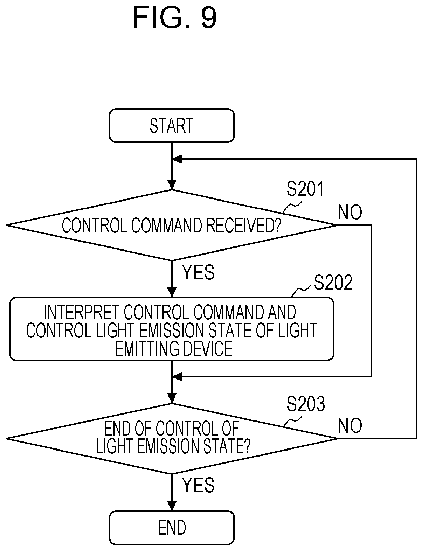

The processing flow for the slave device 30 that receives the control command is described below. Fig. 9 is a flowchart illustrating the processing flow for the slave device 30. The processing flow illustrated in Fig. 9 starts after, for example, a user having a slave device 30 powers on the slave device 30.

In step 201 (S201), the light emission control unit 33 determines whether a control command has been received from the master device 20 via the wireless communication unit 31. If a control command has been received (YES at S201), the processing flow proceeds to S202. However, if the control command has not been received (NO in S201), the processing flow proceeds to S203.

In S202, the light emission control unit 33 interprets the received control command and controls the light emission state of the light emitting device 32. Thereafter, the processing flow proceeds to S203.

In S203, the light emission control unit 33 determines whether control of the light emission state has ended. For example, if the light emission control unit 33 receives, from the master device 20, a command to end the performance, the light emission control unit 33 may determine that the control of the light emission state ends. Alternatively, the light emission control unit 33 may determine that the control of the light emission state ends if the user powers off the slave device 30. If the control of the light emission state ends (YES in S203), the process flow ends. However, if the control of the light emission state does not end (NO in S203), the processing flow returns to S201.

As described above, through the process illustrated in Fig. 9, the slave device 30 waits for reception of a control command until the control of the light emission state ends. Upon receiving a control command, the slave device 30 controls the light emission state of the light emitting device 32.

As described above, according to the present embodiment, the control device 10 determines the performance position at the next time point on the basis of the performance image to be displayed, the position information about the slave devices 30, and the performance position at the previous time point. Thereafter, the control device 10 transmits a control command to each of the slave devices 30. Upon receiving the control command, the slave device 30 controls the light emission state (for example, a light-on or light-off state) in accordance with the received control command. In this manner, a performance in which a performance image is appropriately moved in the performance area takes place. Thus, a mass performance having a high visibility can be provided even in an environment where there is a blank zone.

Note that while the above embodiment has been described with reference to wireless communication using 2.4 GHz band wireless LAN as an example of wireless communication between the master device 20 and the slave device 30 (each of the slave devices 30-1 to 30-N), the present disclosure is not limited thereto. The wireless communication between the master device 20 and the slave device 30 (each of the slave devices 30-1 to 30-N) may be wireless communication using, for example, a 5 GHz band wireless LAN, BLE (Bluetooth Low Energy), 920 MHz band specified low power radio (SLPR), or 60 GHz band WiGig (Wireless Gigabit).

In addition, while the above embodiment has been described with reference to an example in which the whole performance area is divided into four (2 × 2) zones in order to calculate the density of the slave devices 30 (the slave devices 30-1 to the slave device 30-N), the present disclosure is not limited thereto. For example, the whole performance area may be divided into six (2 × 3) zones. A technique for dividing the area can be changed in accordance with, for example, the size of the performance image to be displayed and the size of the whole performance area in which the slave devices 30 are arranged. The same effect can be obtained by using the area divided into zones having the same dimensions. However, depending on the way of presenting the performance, the area need not be divided into zones having the same dimensions.

In addition, depending on how to divide the whole performance area, the number of adjacent areas having densities to be compared with one another to determine the target position changes. For example, when the whole performance area is divided into nine (3 × 3) zones and if the zone with the highest density is the central zone, the zones having the densities to be compared with the density for the central area are the eight zones other than the central zone.

In addition, while the above embodiment has been described with reference to an example in which the performance position determination unit 132 determines the initial position and the target position first and, thereafter, determines the performance positions between the two positions has been described, the present disclosure is not limited thereto. The performance position determination unit 132 may determine a position (a first zone) at which a performance image is displayed at a certain point in time and a position (a second zone) at which the image is displayed after that point in time. In this case, the performance control unit 133 transmits a control command to each of the slave devices so that the performance image is moved from the first zone to the second zone.

In addition, while the above embodiment has been described with reference to a control command being a command specifying the light emission state determined by the performance control unit 133, the control command may be a command specifying a change in light emission state. For example, the control command may be a command specifying a change from the light-on state to the light-off state or a change from the light-off state to the light-on state. In this case, the performance control unit 133 transmits a control command to the slave device 30 that needs to change the light emission state, and the performance control unit 133 need not transmit a control command to a slave device 30 that need not change the light emission state (e.g., a slave device 30 that maintains a light-off state or a slave device 30 that maintains a light-on state).

In addition, while the above embodiment has been described with reference to an example in which the performance position determination unit 132 calculates the distance from the initial position to the target position and sequentially determines the performance positions so that an image moves an equal distance at equal time intervals, the present disclosure is not limited thereto. The distance between the performance positions starting at the initial position and ending at the target position need not be an equal distance, and the time intervals at which the performance image is displayed at the performance positions need not be the same.

In addition, while the above embodiment has been described with reference to the example in which a single master device is connected to the control device 10 in the control system 100, two or more master devices may be connected to the control device 10.

In addition, while a zone having the highest density has been used as the initial position, the initial zone is not limited thereto. Any one of the zones that have a density higher than or equal to a predetermined density may be used as the initial position.

In addition, while the above embodiment has been described with reference to the terms "slave device" and "master device", the present disclosure is not limited thereto. For example, the term "slave device" may be replaced with the term "terminal", and the term "master device" may be replaced with the term "base station apparatus" or "access point".

In addition, the control system 100 described above may be provided in an outdoor facility or may be provided in an indoor facility.

Furthermore, while the above embodiment has been described with reference to the letters "GO" as an example of a performance image used for a performance provided by the control system 100, the performance image is not limited thereto. Note that the presentation of a performance provided by the control system 100 is not limited to a performance image. A variety of information may be used for a performance.

While the various embodiments have been described above with reference to the accompanying drawings, it is to be understood that the present disclosure is not limited to those examples. Various modifications and alterations of the present disclosure will become apparent to those skilled in the art without departing from the scope and principles of the appended claims and are to be included in the technical scope of the present disclosure. In addition, the constituent elements of the above-described embodiments may be combined in any way without departing from the spirit and scope of the disclosure.

While the above embodiments of the present disclosure have been described with reference to the configuration using hardware as an example, the present disclosure can be implemented by using software in cooperation with hardware.

It should be noted that the functional blocks used in the description of the above embodiments are typically implemented as LSIs, which are integrated circuits. The integrated circuits control the functional blocks used in the description of the above embodiments and may include inputs and outputs. The integrated circuits may be formed as a single chip, or some or all of the functional blocks may be integrated into a single chip. The term "LSI" is used herein, but the term "IC", "system LSI", "super LSI" or "ultra LSI" may be used as well depending on the level of integration.

In addition, the method for the circuit integration is not limited to LSI, and the circuit integration may be achieved by dedicated circuitry or a general-purpose processor. A field programmable gate array (FPGA), which is programmable after fabrication of the LSI, or a reconfigurable processor which allows reconfiguration of connections and settings of circuit cells in LSI may be used.

Moreover, should a circuit integration technology replacing LSI appear as a result of advancements in semiconductor technology or other technologies derived from the technology, the functional blocks may be integrated using such a technology. Another possibility is the application of biotechnology, for example.

### <Summary of Present Disclosure>

According to the present disclosure, a communication control device includes a performance position determination unit that determines, from among first to Nth zones (N is an integer greater than or equal to 2) each used to display information by using differences in light emission states of light emitting units included in a plurality of slave devices, the first zone and the second zone in which the information is to be displayed, on the basis of the information and positions of the slave devices and further includes a performance control unit that transmits, to each of the slave devices, a first control command that controls the light emission state of the light emitting unit in order to display the information at a plurality of positions between the first zone and the second zone.

In addition, according to the communication control device of the present disclosure, the information is in the form of a still image.

In addition, according to the communication control device of the present disclosure, the performance position determination unit calculates a density of the slave devices in each of the first to Nth zones on the basis of the positions of the slave devices and determines the first zone and second zone on the basis of the densities of the slave devices in the zones.

In addition, according to the communication control device of the present disclosure, the performance position determination unit determines, from among the zones, the one having the highest density of the slave devices as the first zone and determines, from among the zones, the one having the second highest density of the slave devices after the first zone as the second zone.

In addition, according to the communication control device of the present disclosure, the performance position determination unit determines a third zone in which the information is to be displayed after the information is displayed in the first zone and before the information is displayed in the second zone, and the third zone partially overlaps at least one of the first zone and the second zone.

In addition, according to the communication control device of the present disclosure, if after displaying the information in the second zone, the performance position determination unit continuously displays the information, the performance position determination unit determines the fourth zone on the basis of the information and the positions of the slave devices, and the performance control unit transmits, to each of the slave devices, a second command for controlling the light emission state of the light emitting unit in order to display the information in a plurality of positions between the second zone and the fourth zone.

In addition, according to the communication control device of the present disclosure, the performance control unit transmits the first control command at predetermined regular intervals.

In addition, according to the communication control device of the present disclosure, the first zone is an initial zone in which the information is displayed first, and the second zone is a final zone in which the information is displayed last.

Furthermore, according to the present disclosure, a communication control system includes a communication control device, at least one master device connected to the communication control device, and a plurality of slave devices wirelessly connected to the at least one master device, where each of the slave devices includes a light emitting unit. The communication control device includes a performance position determination unit that determines, from among first to Nth zones (N is an integer greater than or equal to 2) each used to display information by using differences in light emission states of light emitting units included in a plurality of slave devices, the first zone and the second zone in which the information is to be displayed, on the basis of the information and positions of the slave devices and further includes a performance control unit that transmits, to each of the slave devices, a first control command that controls the light emission state of the light emitting unit in order to display the information at a plurality of positions between the first zone and the second zone. Each of the slave devices controls the light emission state of the light emitting unit on the basis of the first control command received via the at least one master device.

### Industrial Applicability

The present disclosure is useful for a system that provides a mass performance using light emitting devices.

### Reference Signs List

- 10: control device
- 11, 21: communication unit
- 12: storage unit
- 13, 23: control unit
- 20: master device
- 22, 31: wireless communication unit
- 30 (30-1 TO 30-N): slave devices
- 32: light emitting device
- 33: light emission control unit
- 121: image storage unit
- 122: performance position storage unit
- 131: position information acquisition unit
- 132: performance position determination unit
- 133: performance control unit

## Claims

1. A communication control device comprising:
a performance position determination unit that determines, from among first to Nth zones (N is an integer greater than or equal to 2) each used to display information by using differences in light emission states of light emitting units included in a plurality of slave devices, the first zone and the second zone in which the information is to be displayed, on the basis of the information and positions of the slave devices; and
a performance control unit that transmits, to each of the slave devices, a first control command that controls the light emission state of the light emitting unit in order to display the information at a plurality of positions between the first zone and the second zone.

2. The communication control device according to Claim 1, wherein the information is in the form of a still image.

3. The communication control device according to Claim 1, wherein the performance position determination unit calculates a density of the slave devices in each of the first to Nth zones on the basis of the positions of the slave devices and determines the first zone and second zone on the basis of the densities of the slave devices in the zones.

4. The communication control device according to Claim 3, wherein the performance position determination unit determines, from among the zones, the one having the highest density of the slave devices as the first zone and determines, from among the zones, the one having the second highest density of the slave devices after the first zone as the second zone.

5. The communication control device according to Claim 1, wherein the performance position determination unit determines a third zone in which the information is to be displayed after the information is displayed in the first zone and before the information is displayed in the second zone, and
wherein the third zone partially overlaps at least one of the first zone and the second zone.

6. The communication control device according to Claim 1, wherein if after displaying the information in the second zone, the performance position determination unit continuously displays the information, the performance position determination unit determines the fourth zone on the basis of the information and the positions of the slave devices, and
wherein the performance control unit transmits, to each of the slave devices, a second command for controlling the light emission state of the light emitting unit in order to display the information at a plurality of positions between the second zone and the fourth zone.

7. The communication control device according to Claim 1, wherein the performance control unit transmits the first control command at predetermined regular intervals.

8. The communication control device according to Claim 1, wherein the first zone is an initial zone in which the information is displayed first, and the second zone is a final zone in which the information is displayed last.

9. A communication control system comprising:
a communication control device;
at least one master device connected to the communication control device; and
a plurality of slave devices wirelessly connected to the at least one master device, each of the slave devices including a light emitting unit,
wherein the communication control device includes a performance position determination unit that determines, from among first to Nth zones (N is an integer greater than or equal to 2) each used to display information by using differences in light emission states of light emitting units included in a plurality of slave devices, the first zone and the second zone in which the information is to be displayed, on the basis of the information and positions of the slave devices and further includes a performance control unit that transmits, to each of the slave devices, a first control command that controls the light emission state of the light emitting unit in order to display the information at a plurality of positions between the first zone and the second zone, and
wherein each of the slave devices controls the light emission state of the light emitting unit on the basis of the first control command received via the at least one master device.
